Europäisches Patentamt

European Patent Office

Office européen des brevets

(11) Numéro de publication: **0 311 515**
**A1**

# (12) DEMANDE DE BREVET EUROPEEN

(21) Numéro de dépôt: **88402517.2**

(22) Date de dépôt: **05.10.88**

(51) Int. Cl.⁴: **C 01 G 23/047**
**B 01 J 21/06**

(30) Priorité: **09.10.87 FR 8713954**

(43) Date de publication de la demande:
**12.04.89 Bulletin 89/15**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Nortier, Patrice**
**2, allée des Fauvettes**
**F-93230 Romainville (FR)**

**Soustelle, Michel**
**4, rue de la Convention**
**F-42000 Saint Etienne (FR)**

**Pijolat, Michèle**
**12, allée de l'Etang**
**F-42350 La Talaudière (FR)**

**Hebrard, Jean-Luc**
**10, rue Darthe**
**F-94600 Choisy/le/Roi (FR)**

(74) Mandataire: **Esson, Jean-Pierre et al**
**Rhône-Poulenc Interservices Service Brevets Chimie 25, quai Paul Doumer**
**F-92408 Courbevoie Cedex (FR)**

(54) Oxyde de titane à propriétés stabilisées.

(57) La présente invention concerne un oxyde de titane à propriétés stabilisées, un procédé de fabrication de cet oxyde de titane et les applications de ce produit comme catalyseur et support de catalyseur. Selon l'invention, l'oxyde de titane comprend un agent de stabilisation thermique constitué par un élément métallique choisi parmi le groupe comprenant notamment les éléments alcalins, alcalino-terreux, les lanthanides, les métaux de transition, l'aluminium, le silicium.

L'oxyde de titane de l'invention est notamment utilisé comme catalyseur ou support de catalyseur dans la réaction de Claus, le traitement des effluents nitrés, ou des réactions de synthèse organique.

FIG. 2

POURCENTAGE DE RUTILE — TEMPS DE CALCINATION (Heures) A 750°C — Ti (A), Ta (D), Al (B)

EP 0 311 515 A1

EP 0 311 515 A1

## Description

## OXYDE DE TITANE A PROPRIETES STABILISEES

La présente invention concerne un oxyde de titane à propriétés stabilisées, un procédé de fabrication de cet oxyde de titane, et les applications de ce produit comme catalyseur et support de catalyseur.

L'invention se rapporte plus particulièrement à un oxyde de titane du type Anatase dont la stabilité thermique tant au niveau de sa surface spécifique que de la transformation en forme rutile est améliorée.

L'oxyde de titane possède des propriétés de surface qui en font un matériau catalytiquement actif dans de nombreuses réactions chimiques d'intérêt industriel. On peut citer la réaction de Claus à titre d'exemple.

Ces propriétés permettent également son utilisation comme support de catalyseur, notamment dans les réactions de dénitrification d'effluents.

L'oxyde de titane possède trois phases cristallographiques. L'Anatase est la phase cristallographique convenable pour les utilisations dans le domaine de la catalyse.

Toutefois, les propriétés de ce composé ne sont pas stables thermiquement, et un chauffage à une température supérieure à 500°C entraîne :
- une diminution de la surface spécifique, néfaste à l'efficacité du catalyseur,
- la transformation, à des températures supérieures à 750°C, en phase rutile, avec une dégradation importante des propriétés catalytiques.

L'addition de sulfates permet de diminuer ces phénomènes. Les procédés de fabrication d'oxyde de titane contenant des sulfates sont décrits dans les brevets français n° 2 438 690 et 2 418 773.

Cependant, la présence de ces ions sulfates modifie la réactivité de surface de l'Anatase, entraînant une diminution importante et même une perte de l'activité catalytique ou de l'aptitude à l'imprégnation par des phases catalytiquement actives de ce produit.

L'invention a notamment pour but de remédier à ces inconvénients en proposant un oxyde de titane du type Anatase ayant des propriétés stabilisées thermiquement et plus particulièrement une vitesse très faible et même nulle de diminution de la surface spécifique, dans les conditions habituelles de fonctionnement des catalyseurs industriels. De plus, la transformation de l'Anatase en rutile est retardée, ce qui améliore donc la stabilité thermique des propriétés catalytiques ou l'aptitude à l'imprégnation de l'oxyde de titane.

A cet effet, l'invention propose un oxyde de titane du type Anatase caractérisé en ce qu'il comprend au moins un agent de stabilisation thermique constitué par un élément métallique, dont la différence d'enthalpie libre de formation entre l'oxyde stable de cet élément à la température ambiante et celle d'un oxyde d'une autre valence dudit élément est supérieure ou égale à 200 Kjoule par mole l'élément métallique.

Par "oxyde", on entend un composé à l'état solide, cristallisé ou amorphe, dans lequel les liaisons chimiques sont à caractère ionique et les anions sont des ions $O^{2-}$.

Les enthalpies libres de formation sont notamment disponibles dans l'ouvrage : "The oxyde handbook" de Samsonov, édité par IFI/Plenum à New York.

De manière préférée, les éléments métalliques convenables pour l'invention sont ceux qui ne donnent qu'un seul oxyde stable à température ambiante.

Ces éléments métalliques sont, selon une caractéristique de l'invention, choisis dans le groupe comprenant les éléments alcalins, alcalino-terreux, les lanthanides, l'aluminium, le silicium, les métaux de transition et leurs mélanges.

Selon une caractéristique préférée de l'invention, les éléments métalliques sont choisis dans le groupe comprenant l'aluminium, le zirconium, le lanthane, le calcium, le baryum et le néodyme.

Selon une autre caractéristique de l'invention, le rapport molaire entre l'élément métallique et l'élément titane de l'oxyde de titane est compris entre 0,001 et 0,15 environ, de préférence entre 0,001 et 0,05, avantageusement entre 0,002 et 0,02.

L'invention a également pour objet un catalyseur et un support de catalyseur comprenant un oxyde de titane à propriétés stabilisées conforme à l'invention. L'oxyde de titane, utilisé comme catalyseur, peut être associé à de nombreux autres métaux ayant eux-mêmes un effet catalytique ou un effet sur les propriétés catalytiques de l'oxyde de titane. Ainsi, on peut citer, à titre d'exemple, les catalyseurs à base d'oxyde de titane utilisés dans la réaction de Claus et décrits notamment dans les brevets français n° 2 224 203 et 2 502 532 de la demanderesse.

L'oxyde de titane conforme à l'invention, utilisé comme support de catalyseur, peut être associé à d'autres oxydes et de nombreuses phases catalytiques peuvent être déposées sur sa surface.

Ainsi, l'oxyde de titane de l'invention peut être utilisé comme support pour les catalyseurs de traitement des effluents contenant des produits nitrés, dans cette application l'oxyde de titane supporte une phase active comprenant notamment des oxydes de vanadium, de tungstène.

Un autre exemple d'utilisation de l'oxyde de titane de l'invention est la réalisation de catalyseur d'oxydation ménagée de produits organiques tels que l'orthoxylène, le catalyseur étant constitué par une phase active comprenant du vanadium déposé sur le support d'oxyde de titane de l'invention.

Un autre objet de l'invention réside dans un procédé de fabrication de l'oxyde de titane conforme à l'invention. Ce procédé consiste à mélanger l'oxyde de titane avec un composé de l'élément métallique utilisé comme agent de stabilisation thermique, puis à sécher éventuellement et calciner le produit obtenu à une température supérieure à 300°C environ.

2

Selon une première variante du procédé, le composé de l'élément métallique est un sel soluble dans un solvant, dans lequel l'oxyde de titane n'est pas soluble. Ainsi, la solution de sel est imprégnée sur l'oxyde de titane. Ce dernier est alors séché puis calciné.

L'imprégnation de l'oxyde de titane est réalisée selon les différents procédés connus, tels que, par exemple, l'imprégnation à sec dans laquelle le volume de solution est inférieur ou égal au volume poreux de l'oxyde de titane, ou l'imprégnation par excès dans laquelle le volume de solution est supérieur au volume poreux de l'oxyde de titane.

Les sels convenables de l'élément métallique convenable sont les sels solubles dont l'anion peut être éliminé par voie thermique ou chimique. Ainsi, les chlorures, nitrates et sulfates et analogues sont des sels convenables, les chlorures et nitrates étant les sels préférés de l'invention.

Comme solvants convenables pour l'invention, on peut citer l'eau et les alcools. Parmi ces derniers, l'éthanol est le solvant préféré.

Quand le sel est décomposable chimiquement, par exemple un chlorure, l'élément métallique est précipité sur la surface de l'oxyde de titane après imprégnation, par exemple par hydrolyse du sel. Cette hydrolyse peut être, par exemple réalisée avec de la vapeur d'eau quand le solvant est alcoolique, ou une base quand le solvant est de l'eau.

Selon une deuxième variante du procédé de l'invention, l'oxyde de titane et l'élément métallique sont simultanément coprécipités à partir d'une solution comprenant un composé du titane tel qu'un sel, par exemple un sulfate, un chlorure, un oxychlorure et un composé de l'élément métallique. Dans cette variante, le titane et l'élément métallique sont précipités généralement sous forme d'oxyde ou d'hydroxyde.

Selon une troisième variante du procédé de l'invention, le composé de l'élément métallique est ajouté sous forme solide à l'oxyde de titane, le mélange étant effectué par malaxage puis chauffage à une température élevée pour faire réagir les deux poudres. Cette méthode est appelée "chamottage".

Avantageusement, on utilise comme composé l'oxyde de l'élément métallique.

L'effet de l'élément métallique sur l'oxyde de titane peut être considéré comme un dopant. En effet, il semble que l'élément métallique soit présent sous une forme cationique dans l'oxyde de titane. Ces cations ont comme effet surprenant et inattendu de diminuer la concentration des lacunes dans l'oxyde réel de titane. Comme un des mécanismes possibles envisagés de la diminution de la surface spécifique de l'oxyde de titane est le transport de matière par la migration des lacunes et leur annihilation mutuelle, la diminution du nombre de lacunes permettrait de diminuer la vitesse du transport de matière et donc la chute de la surface spécifique.

Toutefois, cette explication théorique de l'effet des éléments métalliques est donnée sous toute réserve et ne peut être considérée comme une limitation de l'invention.

D'autres buts, caractéristiques et avantages de l'invention apparaîtront plus clairement au vu des exemples donnés ci-dessous uniquement à titre indicatif et des dessins dans lesquels :

    - la figure 1 représente l'évolution de la surface spécifique des oxydes de titane selon l'invention et de l'oxyde de titane pur à 575°C en fonction du temps, et

    - la figure 2 représente le taux de transformation en phase rutile des oxydes de titane selon l'invention en fonction de la durée de calcination à 750°C.

### Exemple 1

On donne un exemple de fabrication d'oxyde de titane du type Anatase à partir d'oxychlorure de titane ($TiOCl_2$). Toutefois, cet oxyde de titane peut être préparée par toutes méthodes connues et notamment à partir de l'Ilménite sans pour cela sortir du cadre de l'invention. En effet, l'effet de "dopage" des éléments métalliques est identique pour les oxydes de titane du type Anatase quel que soit le procédé de fabrication de ces oxydes.

L'oxychlorure de titane en solution aqueuse ayant une concentration de 1,95 mole en Ti par kilogramme de solution est neutralisé par de l'ammoniaque concentré - le pH de fin de neutralisation est de 7,8. Après agitation du milieu pendant 30 mn, la solution est filtrée, le gâteau récupéré est lavé par de l'eau jusqu'à l'absence d'ions chlorures dans les eaux de lavage. Le produit est séché pendant 16 heures à 120°C et calciné pendant 3 heures à 400°C.

Le diagramme de diffraction des rayons X fait apparaître la phase Anatase et la surface spécifique mesurée selon la méthode BET décrite ci-dessous est de 100 m²/g.

Ce produit sera désigné par la lettre A dans la suite de texte.

### Test de mesure de surface spécifique

Les mesures de surface spécifique sont effectuées selon la méthode BET à partir des courbes isothermes d'adsorption d'azote à 77°K. L'étalonnage est réalisé avec l'hélium. L'appareil utilisé est commercialisé sous la dénomination MICROMERITICS 2100E.

### Test de vieillissement de l'oxyde de titane

Les calcinations ou maintiens à température élevée sont réalisés dans un four. Les durées de calcination ou maintien sont comptés entre le moment de l'introduction de l'échantillon dans le four préalablement chauffé à la température d'essai et celui de la sortie de l'échantillon du four chaud.

EP 0 311 515 A1

### Exemples 2 à 16

Ces exemples illustrent la préparation d'un oxyde de titane selon l'invention avec un procédé d'imprégnation de l'oxyde de titane obtenu à l'exemple 1.

Dans le tableau I ci-dessous sont indiqués pour chaque élément le ou les composés métalliques solubilisés, le solvant utilisé et le rapport atomique de l'élément métallique à l'élément titane dans le produit obtenu.

Ces produits ont été préparés selon le mode opératoire suivant : On dissout le sel de l'élément métallique, pour l'exemple 3 le chlorure d'aluminium, dans le solvant. On verse goutte à goutte cette solution sur 5 g d'oxyde de titane obtenu à l'exemple 1 et contenu dans une coupelle. Le produit imprégné est maintenu à 80°C dans une enceinte sous atmosphère humide, pendant 20 heures. Le produit est ensuite séché dans une étuve à 110°C pendant 6 heures. Chaque produit obtenu est repéré par une lettre de l'alphabet.

Tableau I

| Ex | | TiO$_2$ | Composés éléments métalliques | Solvant | Rapport Elem./Ti |
|---|---|---|---|---|---|
| 2 | B | | AlCl$_3$ | Ethanol | 0,0034 |
| 3 | C | | AlCl$_3$ | Ethanol | 0,00068 |
| 4 | D | | TaCl$_5$ | Ethanol | 0,0226 |
| 5 | E | | LaCl$_3$ | Ethanol | 0,0174 |
| 6 | F | | La(NO$_3$)$_3$,6H$_2$O | Ethanol | 0,0174 |
| 7 | G | | LaCl$_3$ | Ethanol | 0,00174 |
| 8 | H | | Nd(NO$_3$)$_3$,6H$_2$O | Ethanol | 0,01805 |
| 9 | I | | NaCl | Eau | 0,00288 |
| 10 | J | | KCl | Eau | 0,00488 |
| 11 | K | | CaCl$_2$ | Ethanol | 0,00502 |
| 12 | L | | Ba(NO$_3$)$_2$ | Eau | 0,01719 |
| 13 | M | | ZrCl$_4$ | Ethanol | 0,0114 |
| 14 | N | | Ni(NO$_3$)$_3$ | Ethanol | 0,00735 |
| 15 | Q | | AlCl$_3$ + LaCl$_3$ | Ethanol | Al 0,00169 La 0,0087 |
| 16 | T | | NaCl | Eau | 0,043 |

### Exemple 17

L'oxyde de titane A obtenu dans l'exemple 1 est mélangé avec de la silice commercialisée par la Société DEGUSSA sous l'appellation Aérosil 200V. Le mélange solide obtenu est calciné pendant 6 heures à 350°C. Le produit obtenu repéré $\underline{O}$ présente un rapport atomique Si/Ti égal à 0,00257.

### Exemple 18

Le mode opératoire est semblable à celui de l'exemple 1 pour la préparation de l'oxyde de titane. Toutefois, avant neutralisation, on ajoute à la solution d'oxychlorure de titane du nitrate de lanthane La(NO$_3$)$_3$,6H$_2$O, de façon à obtenir une solution contenant 0,010 mole de La pour 1 mole de Ti. La solution ainsi obtenue est traitée selon les opérations indiquées à l'exemple 1. Le produit $\underline{R}$ obtenu présente un rapport atomique La/Ti égal à 0,0174.

### Exemple 19

Le mode opératoire est semblable à celui de l'exemple 1. Toutefois, la neutralisation de la solution d'oxychlorure de titane est réalisée avec une solution aqueuse de silicate tétra-éthylammonium pour obtenir une solution contenant 0,01 mole de silicium pour 1 mole de titane. La neutralisation est ensuite poursuivie avec de l'ammoniaque jusqu'à pH = 7,8 comme dans l'exemple 1. La suite des opérations est identique à celle de l'exemple 1. Le produit obtenu nommé S présente un rapport atomique Si/Ti égal à 0,00257.

### Exemple 20

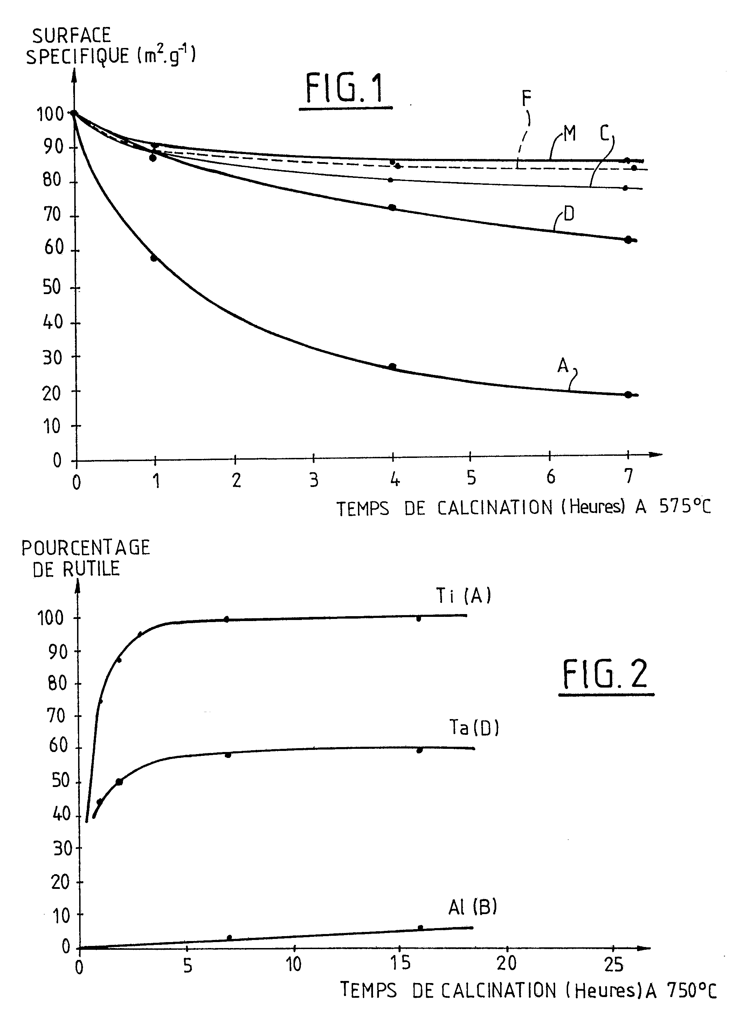

Ces différents oxydes de titane sont calcinés et vieillis selon le test indiqué ci-dessous, la mesure de la surface spécifique est réalisée pour tous ces essais après 1 heure et 7 heures de calcination. Les résultats sont rassemblés dans le Tableau II. Pour certains, exemples 1,3,4,6,13, l'évolution de la surface spécifique en fonction de la durée de calcination est représentée à la figure 1.

Ces courbes illustrent clairement l'effet positif des éléments métalliques sur la stabilisation de la surface spécifique de l'oxyde de titane.

4

Tableau II

| Nom du produit | Surface spécifique après 1 heure à 575°C (m²/g) | Surface spécifique après 7 heures à 575°C (m²/g) |
|---|---|---|
| A | 58 | 17 |
| B | 89 | 77 |
| C | 74 | 40 |
| D | 88 | 67 |
| E | 90 | 85 |
| F | 91 | 84 |
| G | 71 | 42 |
| H | 90 | 84 |
| I | 79 | 49 |
| J | 81 | 53 |
| K | 88 | 75 |
| L | 90 | 84 |
| M | 90 | 82 |
| N | 72 | 36 |
| O | 60 | 27 |
| P | 87 | 63 |
| Q | 93 | 85 |
| R | 90 | 83 |
| S | 80 | 42 |
| T | 70 | 45 |

Exemple 21

Les courbes de la figure 2 illustrent l'effet des éléments métalliques sur la transformation de la phase Anatase en phase Rutile, à 750°C. Ainsi, en présence de cations aluminium, moins de 10 % d'Anatase est transformé en Rutile après 20 heures à 750°C, alors que pour l'oxyde de titane sans agent de stabilisation, cette transformation est totale après moins de 5 heures à 750°C.

Pour un oxyde de titane contenant les cations zirconium et lanthane, celui-ci reste en phase Anatase à 750°C.

Exemple 22

Le produit M fabriqué selon l'exemple 13 est mis en forme pour être testé comme catalyseur dans le procédé Claus.

Le produit est mis en forme, par pastillage, en granulés de diamètre 4 mm, puis séché à 110°C pendant 4 heures et calciné à 400°C pendant 2 heures.

Le catalyseur ainsi obtenu est placé dans un réacteur, dans lequel est alimenté un gaz de composition volumique suivante :

| | |
|---|---|
| $H_2$ | 6 % |
| $SO_2$ | 4 % |
| COS | 0,3 % |
| $CS_2$ | 1 % |
| $H_2O$ | 28 % |
| $N_2$ | 60,7 % |

La température des gaz dans le réacteur est de 225°C.    Les rendements obtenus pour différents temps de contact sont rassemblés dans le Tableau III.

## EP 0 311 515 A1

Tableau III

| Temps de contact<br>Rendement | 1s | 2s | 3s | 4s |
|---|---|---|---|---|
| Rendement en soufre<br><br>$2H_2S + SO_2 \rightarrow 3S + 2H_2O$ (1) | 66 | 66 | 66 | 66 |
| Rendement hydrolyse de COS<br><br>$COS + H_2O \rightarrow H_2 + CO_2$ | 85 | 99 | 100 | 100 |
| Rendement hydrolyse de $CS_2$<br><br>$CS_2 + 2H_2O \rightarrow 2H_2S + CO_2$ | 71 | 95 | 99 | 100 |

(1) Il est à noter que le rendement thermodynamique en soufre correspondant aux conditions de réaction est de 66,5 %.

## Revendications

1. Oxyde de titane de type Anatase caractérisé en ce qu'il comprend au moins un agent de stabilisation thermique constitué par un élément métallique dont la différence d'enthalpie libre de formation entre l'oxyde stable dudit élément à température ambiante et celle d'un oxyde d'une autre valence dudit élément est supérieure ou égale à 200 Kjoule/mole d'élément métallique.

2. Oxyde de titane selon la revendication 1, caractérisé en ce que le rapport molaire entre l'élément métallique précité et l'élément titane est compris entre 0,001 et 0,15.

3. Oxyde de titane selon la revendication 2, caractérisé en ce que le rapport molaire précité est compris entre 0,001 et 0,05, de préférence entre 0,002 et 0,02.

4. Oxyde de titane selon l'une des revendications précédentes, caractérisé en ce que l'élément métallique précité est choisi parmi le groupe comprenant les éléments alcalins, alcalino-terreux, les lanthanides, les métaux de transition, l'aluminium, le silicium et leurs mélanges.

5. Oxyde de titane selon la revendication 4, caractérisé en ce que l'élément métallique précité est choisi dans le groupe comprenant l'aluminium, le zirconium, le lanthane, le calcium, le baryum, le néodyme.

6. Support de catalyseur caractérisé en ce qu'il comprend un oxyde de titane selon l'une des revendications précédentes.

7. Catalyseur caractérisé en ce qu'il comprend un oxyde de titane selon l'une des revendications 1 à 5.

8. Procédé de fabrication d'un oxyde de titane selon l'une des revendications 1 à 5, caractérisé en ce qu'il consiste à mélanger l'oxyde de titane avec un composé de l'élément métallique précité, à calciner le produit obtenu à une température supérieure à 300°C.

9. Procédé selon la revendication 8, caractérisé en ce que le composé précité de l'élément métallique est un sel soluble dans un solvant dans lequel l'oxyde de titane n'est pas soluble et en ce que l'oxyde de titane est imprégné par la solution.

10. Procédé selon la revendication 9, caractérisé en ce que le sel soluble est un chlorure, nitrate, de l'élément métallique.

11. Procédé selon l'une des revendications 9 ou 10, caractérisé en ce que le solvant est choisi dans le groupe comprenant l'eau, les alcools, tels que l'éthanol.

12. Procédé selon la revendication 9, 10 ou 11, caractérisé en ce que le sel métallique est, après imprégnation, décomposé thermiquement pendant la calcination.

13. Procédé selon la revendication 9, 10 ou 11 caractérisé en ce que, après imprégnation, l'élément métallique est précipité sur la surface de l'oxyde de titane.

14. Procédé selon la revendication 8, caractérisé en ce que le mélange est obtenu par coprécipitation de l'élément titane et de l'élément métallique précité sous forme de composés insolubles tels que oxydes ou hydroxydes.

15. Procédé selon la revendication 8, caractérisé en ce que le mélange précité est obtenu par mélange de composés solides de l'élément titane et de l'élément métallique, et en faisant réagir ces solides entre eux à température élevée.

16. Procédé selon la revendication 15 caractérisé en ce que les composés précités sont les oxydes de titane et de l'élément métallique.

FIG.1

SURFACE SPECIFIQUE ($m^2.g^{-1}$)

TEMPS DE CALCINATION (Heures) A 575°C

FIG.2

POURCENTAGE DE RUTILE

Ti (A)

Ta(D)

Al (B)

TEMPS DE CALCINATION (Heures)A 750°C

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 273 768 (BRITISH STEEL CORP.(CHEMICALS)) <br> * Page 7, revendications 1,6; page 5, exemple 7 * <br> --- | 1,4,6,8 ,10,11 | C 01 G 23/047 <br> B 01 J 21/06 |
| A | GB-A-2 178 673 (INTEVEP) <br> * Page 6, revendication 8 * <br> --- | 1 | |
| A | EP-A-0 172 972 (RHONE-POULENC SPECIALITES CHIMIQUES) <br> * Page 8, lignes 1-21 * <br> --- | 1,5,8, 10,12 | |
| A | US-A-4 166 147 (R.W. LANGE) <br> * Colonne 20, lignes 40-68 * <br> --- | 1,4 | |
| A | EP-A-0 032 426 (MONTEDISON) <br> --- | | |
| A | GB-A-1 028 168 (BRITISH PETROLEUM CO.) <br> * Page 1, lignes 64-69; page 2, revendication 1 * <br> ----- | 2,4,6,7 | |

DOMAINES TECHNIQUES RECHERCHES (Int. Cl.4)

C 01 G
B 01 J
C 09 C

Le présent rapport a été établi pour toutes les revendications

| Lieu de la recherche | Date d'achèvement de la recherche | Examinateur |
|---|---|---|
| LA HAYE | 15-01-1989 | LIBBERECHT-VERBEECK E.M. |

EPO FORM 1503 03.82 (P0402)